# EUROPEAN PATENT APPLICATION

(11) **EP 2 581 345 A1**
(43) Date of publication of application: **17.04.2013**
(21) Application number: 11184858.6
(22) Date of filing: 12.10.2011
(51) Int. Cl.: C02F 1/42, C02F 5/00

(54) **Separation of alkali earth metals and heavy metals by means of a selective cation exchange column in the buffering mode**

(71) Applicant: Clariant Produkte (Deutschland) GmbH, 65929 Frankfurt am Main (DE)
(72) Inventor: Hartel, Johannes, 84137 Vilsbiburg (DE)
(74) Representative: Stolmár & Partner

(57) **Abstract**

The present invention refers to a method for lowering the peak concentration of hardness-causing metal cations in wastewater and a method of converting alkali metal sulfate into alkali metal hydroxide.

## Description

The present invention refers to a method for lowering the peak concentration of hardness-causing metal cations in wastewater and a method of converting alkali metal sulfate into alkali metal hydroxide.

In many industrial applications and chemical methods wastewater is produced which may contain components that are wished to be recycled for economical or ecological reasons. In the last decades environmental provisions have imposed the pressure upon chemical industry in cleaning wastewater before releasing it to the environment. If, for example, wastewater is wished to be cleaned which contains heavy metal ions these ions have to be reduced to an amount regulated by law. In other cases, some components have to be reduced in the wastewater before some further components can be recycled for procedural reasons.

For instance, at the production of lithium metal phosphate compounds, in particular lithium transition metal phosphate compounds, which have recently been used as cathode and anode materials in secondary batteries (US 5,910,382, WO 02/099913), such wastewater is produced. Among the solid state synthesis of such lithium transition metal phosphate, wet chemical methods for the production of such compounds are used, such as for instance described in DE 10353266 A1 or WO 02/083555. In such wet chemical methods typically lithium hydroxide is employed as lithium starting material which is then contacted with an acid solution, usually containing phosphoric acid, and at least one transition metal sulfate. One problem by producing lithium transition metal phosphates by means of such a wet chemical method is the high loss of lithium ions in the wastewater formed by this method. The high amount of unwanted ions in this wastewater makes the conditioning and the recovery of the starting materials difficult.

From the procedural point of view up to now only extreme laborious purification methods are known in order to enable the recovery of wastewater containing lithium. One possibility is for instance described in DE 10 2007 033 460, wherein by addition of barium hydroxide barium sulfate is precipitated and lithium hydroxide remains in solution. The disadvantage of this method is the high formation of barium sulfate which is also not obtained as an acceptable so-called blanc fix type for the further industrial use.

At the present the recovery of alkali metal hydroxides from solutions containing alkali metal sulfate is made by means of electrodialysis. One problem with respect to electrodialysis is that the formation of hydroxides or oxides of alkali earth metals or heavy metals partly contained in the wastewater damages the membranes of the electrodialysis apparatus. Alkali earth metal ions and heavy metal ions contained in the wastewater are usually removed by passing the wastewater over a cation exchange column before the wastewater is subjected to the electrodialysis treatment.

Usually the step of passing the wastewater over a cation exchange column is made in order to remove the hardness-causing metal cations from the wastewater solution. The cation exchange column is thereby loaded with hardness-causing metal cations until its maximum loading is reached. In order to ensure that the flow of wastewater can be purified continuously, the entirely loaded cation exchange column (first column) has to be substituted by another "fresh" cation exchange column (second column) which is unloaded with hardness-causing metal cations. During the second column is loaded with hardness-causing metal cations the first column which is fully loaded with hardness-causing metal cations has to be regenerated in order to ensure that it can again be used in the purification method. When the second column is fully loaded with hardness-causing metal cations the regenerated first column can again be applied in the method during the second column is regenerated, and so on. By doing so, a continuous purification is ensured. The regeneration of the columns is time consuming and laborious and is therefore a disadvantage of this method. Furthermore, since the fully loaded cation metal columns have to be regenerated several reservoirs for regeneration liquids have to be provided. Moreover, several collection reservoirs for liquids have to be provided in this method as well. The regeneration of the columns requires at least two steps, namely elution of the hardness-causing metal cations by subjecting the column to sulfuric acid in order to bring it in the H⁺-form and then bringing it back into the form, wherein the alkali metal ions take place instead of the H⁺ cations. That is, regeneration of columns and providing several reservoirs for liquids make this method laborious and time-consuming, so that there is a high need of simplification of this procedure.

It was therefore an object of the invention to provide a method, wherein the amount of hardness-causing metal cations in wastewater can be reduced in a simple, time-saving and non-laborious way.

First of all, the inventors of the present application recognized that it is usually not necessary to remove all hardness-causing metal cations in its entirety in order to ensure that membranes of an electrodialysis apparatus are not deteriorated. It is however necessary to reduce occurring peak concentrations which may periodically be given depending on the kind of wastewater and the methods the wastewater is produced by.

The object of the present invention is solved by providing a method for lowering the peak concentration of hardness-causing metal cations in wastewater containing an alkali metal ion and a hardness-causing metal cation, the concentration of the hardness-causing metal cation in the wastewater being non-continuous, wherein the wastewater is continuously passed over a cation exchange column selective for binding the hardness-causing metal cation, characterized in that the hardness-causing metal cation is being retained when a threshold value concentration of the hardness-causing metal cation is exceeded during the raise to a peak concentration of the hardness-causing metal cation, and the hardness-causing metal cation being released when its concentration falls under the threshold value concentration.

In other words, in the method of the present invention the hardness-causing metal cation is not removed from the wastewater, but always when the concentration of the hardness-causing metal cations in the wastewater reaches a threshold value concentration, the hardness-causing metal cations are retained in the column and are then released from the column when the concentration of the hardness-causing metal cations is again fallen under the threshold value concentration. By doing so, the peak concentration is "caught" and the highest acceptable mean concentration of the hardness-causing metal cations in the solution leaving the cation exchange column (effluent solutions) during the course of time is ensured. The threshold value concentration is usually dependent on the material of the cation exchange column and the concentration of the alkali metal cation. For example, if the concentration of the alkali metal is continuously constant then the threshold value concentration is a specific value. If the concentration of the alkali metal cations varies during the course of time, then the threshold value concentrations varies as well. If the concentration of the alkali metal cations is increased then the threshold value concentration also increases since a higher competitive amount per space of alkali metal cations also requires a higher amount per space of hardness-causing metal cations to be bound to the anionic groups of the cation exchange column. If the concentration of the alkali metal cations decreases then the threshold value concentration of the hardness-causing metal cations decreases since a lower amount of hardness-causing metal cations is sufficient to be bound to the anionic groups of the cation exchange column.

Under the term "peak concentration" the time-by-time occurring maximum concentration in the flow of wastewater is to be understood.

Under the term "wastewater" not only wastewater produced by a method for the production of lithium metal phosphates is to be understood, but all kinds of wastewaters produced containing an alkali metal ion and a hardness-causing metal cation.

The term "hardness-causing metal cation" is referred to as metal cations which may form insoluble compounds in water, such as carbonates, hydrogen carbonates, hydroxides or oxides. The term "threshold value concentration" is to be understood as the concentration of the hardness-causing metal cations at which the hardness-causing metal cations starts to be retained from the cation exchange column.

The method of the present invention has the advantage that the cation exchange column is never loaded to its maximum loading so that it can always lower the peak concentration and has not to be separately regenerated. In the method of the present invention the wastewater flows through the cation exchange column continuously so that the term "wastewater" can be understood as a "flow of wastewater". The concentration of the wastewater during the course of time is never as long above the threshold value concentration so that the cation exchange column is never fully loaded by hardness-causing metal cations. Since a concentration over a threshold value concentration of the hardness-causing metal cations is timely restricted in this sense, it is ensured that during the course of time the concentration of the hardness-causing metal cations is long enough under the threshold value concentration so that the cation exchange column is regenerated during the flow of wastewater passes over the cation exchange column. Since the concentration of the alkali metal ion is preferably constant in a range of 0.5 to 3.5 mol/L, this high concentration of alkali metal ions ensures that the hardness-causing metal cations bound to the cation exchange column may be released when the concentration of the hardness-causing metal cation falls under the threshold value concentration.

The term "non-continuous" in connection with the concentration of the hardness-causing metal cation should be understood as that the concentration during the course of time fluctuates from peak concentrations to minimum concentrations.

By knowing the capacity of the cation exchange column used in the method of the present invention a person skilled in the art knows the amount of the cation exchange material used in the cation exchange column which depends on the length of time the concentration is over the threshold value concentration and the length of time wherein the concentration is under the threshold value concentration thereby regenerating the cation exchange column.

When the method of the present invention starts to be carried out, the cation exchange column is preferably in the form of the alkali metal, i.e. at the beginning of the method. Under the term "in the form of the alkali metal" is understood that the alkali metals present in the wastewater are bound in the form of alkali metal ions by ionic forces to the anionic surface of the cation exchange column. In the same way the hardness-causing metal cations are bound to the cation exchange column, i.e. by means of ionic forces and likewise additionally by a coordinative binding. In order to bring the cation exchange column at the beginning of the method into the form of the desired alkali metal, the cation exchange column usually present in the Na⁺-form is treated with a Bronsted acid, such as sulfuric acid, in order to bring it in the H⁺-form. Afterwards the cation exchange column is preferably treated with an alkali hydroxide solution in order to bring it in the form of the desired alkali metal. In case the desired alkali metal is Na⁴ and the used column is in the Na⁺-form this preparation before the beginning of the method of the present invention has not to be made.

In the method of the present invention, the threshold value concentration preferably lies in the range of from 0.070 to 0.125 mmol/L of the hardness-causing metal cation in the wastewater, more preferably in the range of from 0.085 to 0.12 mmol/L, and most preferred in the range of from 0.1 to 0.11 mmol/L.

After the wastewater has been passed the cation exchange column the maximum concentration of the hardness-causing metal cation in the so-called effluent solution is at most 0.125 mmol/L, preferably at most 0.12 and more preferably at most 0.11 mmol/L. That is, the concentration of the hardness-causing metal cation in the effluent solution never exceeds the concentration of 0.125 mmol/L, more preferably 0.12 mmol/L and most preferred 0.11 mmol/L during the course of time. The effluent solution is the solution which leaves the column or discharges from the column.

It is further preferred that the maximum loading of the hardness-causing metal cation on the cation exchange column is at most 95 % of the break-through capacity of the ion exchange column at the peak concentration of the hardness-causing metal cation. More preferably, the maximum loading of the hardness-causing metal cation on the cation exchange column is at most 90 % and even more preferred 85 %. This has the advantage, that there is always a buffering percentage of possible additional loading of the cation exchange column in order to ensure that the peak concentration can always be lowered to the desired amount of maximum concentration in the effluent solution.

As already mentioned above the mean concentration of the alkali metal ion in the wastewater is preferably in the range from 0.5 to 3.5 mol/L, more preferably in the range of from 1 to 3 mol/L and most preferred 1.5 to 2.5 mol/L. In case the mean concentration of the alkali metal ion falls under the lower limit it cannot be ensured that the cation exchange column is regenerated since the concentration of the alkali metal ions is not high enough to replace the hardness-causing metal cations by alkali metal ions. In case the upper limit is exceeded it can also not be ensured that the hardness-causing metal cation is retained from the cation exchange column during the raise to a peak concentration of the hardness-causing metal cation in the flow of wastewater.

It is further preferred that the concentration of the hardness-causing metal cation in the wastewater fluctuates in the course of time from 0 to 1 mmol/L, preferably 0.01 to 0,5 mmol/L and most preferred from 0.05 to 0,25 mmol/L. The fluctuation of the concentration of the hardness-causing metal cation is important in order to ensure that the concentration falls under the threshold value concentration for the regeneration of the cation exchange column.

The cation exchange column selective for binding the hardness-causing metal cation comprises a solid support material and anionic groups on the surface of the solid support material.

The solid support material may be an organic polymeric material or an inorganic material. It is preferably a macroporous material. In case the solid support material is a polymeric material, it is substantially non-swellable. For that reason, it is mostly preferred that the polymeric material has a high cross-linking degree. In case the solid support material is an inorganic material, the inorganic material is some kind of inorganic mineral oxide, preferably selected from the group consisting of silica, alumina, magnesia, titania, zirconia, fluorosile, magnetite, zeolites, silicates (cellite, kieselgur), mica, hydroxyapatite, fluoroapatite, metal-organic frameworks, ceramics and glasses, like controlled pore glass, metals such as aluminum, silicon, iron, titanium, copper, silver, gold and also graphite or amorphous carbon. Most preferred as solid support is crosslinked polystyrol.

Independent of whether the solid support material is a polymeric material or an inorganic material, the solid support material provides a solid base of a minimum rigidity and hardness which functions as an insoluble support and provides a basis for the enlargement of the interface between stationary and mobile phases which is the place of interaction with the analyte as the molecular basis for the process of the partitioning between said phases, and for an increased mechanical strength and abrasiveness, especially under flow and/or pressurized conditions.

The solid support materials according to the invention may be of homogeneous or heterogeneous composition, and therefore also incorporates materials which are compositions of one or more of the materials mentioned above in particular multilayered composites.

The solid support material may be a particulate material, preferably having a particle size of from 50 µm to 2 mm. The solid support material may also be a sheet- or fiber-like material such as a membrane. The external surface of the solid support material thus may be flat (plates, sheets, foils, disks, slides, filters, membranes, woven or non-woven fabrics, paper) or curved (either concave or convex: spheres, beads, grains, (hollow) fibers, tubes, capillaries, vials, wells in a sample tray), more preferred curved.

The pore structure of the internal surface of the solid support material may, inter alia, consist of regular, continuous capillary channels or of cavities of irregular (fractal) geometry. Microscopically, it can be smooth or rough, depending on the way of manufacture. The pore system can either extend continuously throughout the entire solid support material or end in (branched) cavities. The rate of an analyte's interfacial equilibration between its solvation in the mobile phase and its retention on the surface of the stationary phase and thus the efficiency of a continuous flow separation system is largely determined by mass transfer via diffusion through the pores of the solid support material and thus by its characteristic distribution of particle and pore sizes. Pore sizes may optionally show up as asymmetric, multimodal and/or spatially (e.g. cross-sectionally) inhomogeneous distribution.

The anionic groups on the surface of the solid support material preferably are deprotonated acid groups, such as carboxylic acid groups, sulfonic acid groups or phosphonic acid groups. It is even more preferred that the anionic group is an ionic group which has two ionic groups (dianionic groups) which are in neighborhood, that is, they are preferably linked together by a group having two to five atoms, preferably three or four and most preferred three atoms, when only the atoms are counted which connect the two anionic residues in a direct line of atoms. Preferred dianionic groups are imino diacetic acid groups, imino disulfonic acid groups or imino diphosphonic acid groups, wherein imino diacetic acid groups are most preferred.

The materials mentioned for the cation exchange column are not limited to the examples described herein, as long as the cation exchange column is able to selectively bind hardness-causing metal cations, preferably Ca, Mg, Cr, Ni, Zn, Mn, Fe or combinations thereof. That is, the cation exchange column used in the method of the present invention should be selective for binding these metal cations and should have a higher binding capacity to these metals than to alkali metals. The break-through capacity of the cation exchange column is preferably in the range of 0.4 to 0.6 eq/L at pH 9 at contents of calcium of 2 to 20 ppm and at ambient temperature, based on the volume of the material in the H⁺-form. The break-through capacity cannot be equated to the total capacity of a cation exchange column. The total capacity results from the amount of exchange groups (equivalents (eq)) per amount of the cations exchange column (in kg) and is a constant which is caused by the production of the material, which is usually given in eq/kg of the dry cation exchange column. The total capacity is usually determined in accordance with DIN 54403. Under operation conditions of the cation exchange column the total capacity in one exchange cycle is never used to full capacity because under dynamic conditions the equilibrium is never completely adjusted (kinetics of the material). This is because a part of the exchange groups is blocked by irreversible incidents, the regeneration is usually not complete and the exchanged groups flow out of the column before all exchangeable groups are saturated. Therefore, the capacity used under operation conditions is the so-called break-through capacity. The break-through capacity is reached when the first exchangeable groups leave the column and is given in equivalents per liter (eq/l) of the wet cation exchange column. The break-through capacity is not constant, but is mainly dependent on the total capacity, the temperature, the pH value of the wastewater and the concentration of the exchangeable ions (hardness-causing metal cations) in solution. The break-through capacity usually increases, when the temperature, the pH value and the concentration of the exchangeable ions increases. The break-through capacity is determined in that the solution containing the hardness-causing metal cation is passed over the regenerated and conditioned cation exchange column and it is determined when the hardness-causing metal cation is found in the effluent solution. The retained amount of the hardness-causing metal cation is determined on the basis of the amount of the solution passed over the column and the concentration of the metal cation in the influent flow and the effluent flow. The resulting value of the determined break-through capacity is always given in dependence of the temperature, the pH value of the wastewater and the concentration of the exchangeable ions in solution.

The materials used for the cation exchange column preferably have a particle size in the range of from 0.2 to 1.50 mm, more preferred of from 0.4 to 1.25 mm. The bulk density of this material is preferably in the range of from 600 to 1000 g/L, more preferred of from 700 to 900 g/L. The normal density of this material is preferably in the range of from 1 to 1.3 g/ml, more preferred of from 1.1 to 1.25 g/ml.

It is further preferred that the pH-value of the wastewater is above the necessary decomplexation-pH-value of earth alkali metals. That is, it is further preferred that the pH of the wastewater is more than 4.5, more preferred more than 5 and most preferred more than 6.5, in order to ensure that the hardness-causing metal cations are sufficiently bound to the cation exchange column.

It is further preferred that the temperature of the cation exchange column is in the range of from 20 to 80°C, more preferred 30 to 70°C and most preferred 40 to 60°C, in order to enhance the capacity of the cation exchange column.

The flow rate of the wastewater passed over the cation exchange column is preferably in between 10 to 30 volume units of the bed of the cation exchange column per hour.

The minimum length of the cation exchange column is at least 20 cm, more preferably 50 cm and most preferred 1 m.

It is further preferred that a cation exchange column is used in the method of the present invention, wherein the binding selectivity of the respective metals is as follows: copper > vanadium > uranium > lead > nickel > zinc > cobalt > cadmium > iron (II) > beryllium > manganese > calcium > magnesium > strontium > barium > sodium.

It is further preferred in the method of the present invention that the alkali metal ion is selected from Li, Na, K or a combination thereof. Li is most preferred.

The hardness-causing metal cation is preferably an alkali earth metal ion, a heavy metal ion or a combination of these metal ions. The alkali earth metal is preferably Ca, Mg or a combination thereof. The heavy metal ion is preferably selected from the group consisting of Cu, V, U, Pb, Ni, Zn, Co, Cd, Fe, Be and Mn and combinations of these metals. It is more preferred that the heavy metal ion is selected from the group consisting of Cr, Ni, Zn, Mn, Fe and combinations of these metals.

It is further preferred that the wastewater contains sulfate ions, preferably in an amount in the range of from 0.70 to 1.20 mol/L, more preferably of from 0.85 to 1.15 mol/L and most preferred of from 0.95 to 1.1 mol/L.

The present invention further relates to a method of converting alkali metal sulfate into alkali metal hydroxide, comprising the following steps:
(a) lowering the peak concentration of hardness-causing metal cations in wastewater containing an alkali metal ion and a hardness-causing metal cation according to the method of the invention, wherein the counter ion of the alkali metal ion is a sulfate anion; and
(b) exchanging the sulfate anion by a hydroxide ion by means of electrodialysis.

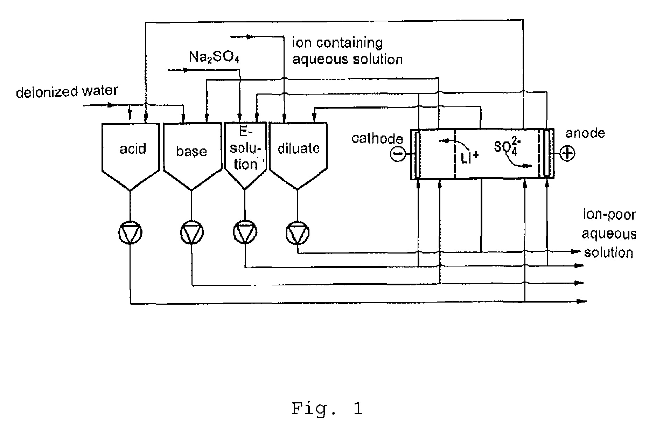

Step (a) of the above method of the present invention is preferably carried out with a cation exchange column (Lewatit TP 208 from Bayer). The flow rate of the wastewater through the cation exchange column preferably lies in the range of from 5 to 40 bed volumes per hour, more preferably 10 to 30 bed volumes per hour and most preferred 15 to 25 be dvolumes per hour. The term "bed volume" means the volume amount of the cation exchange column used.The effluent solution (ion-containing aqueous solution) obtained after step (a) is then in step (b) subjected to an electrodialysis treatment. The preferred electrodialysis treatment is described in connection with Figure 1 below.

The present invention is further explained by means of the following Figures and Examples which should however not be understood as being limiting for the scope of the present invention:

### Figures:

Fig. 1: Figure 1 shows the schematic assembly of an electrodialysis aparatus which is preferably used in the present invention.

In Figure 1 the schematic assembly of an electrodialysis apparatus with bipolar technique is shown, which may be used in the process of the present invention wherein alkali metal sulfate is converted into alkali metal chloride. The ion containing aqueous solution obtained after the treatment with the cation exchange column in the buffering mode is delivered from a heatable feed line to the electrodialysis membranes by means of a pump. In the field of the direct current of the electrodialysis stack the ions migrate to the chamber of the acid or the base, respectively. At the beginning of the process the chambers of the acid and base are filled with deionized water (for reasons of stability the chamber of the acid is pre-adjusted to pH 2 by means of H₂SO₄) . The degraded diluate and the acid and base formed by the electrodialyse are redelivered into the collecting chambers in order to achieve a batch-wise degradation of the feed.

In large-scale processes in accordance with the present invention this process is driven continuously, such that the partial flows (aqueous solution/diluate, acid and base) fed into the bipolar electrodialyse are supplied over the respective collecting chambers to the so-called electrodialyse stack (i.e. the plurality of electrodialyse chambers) in a cycle process, and thereby only a minor part of these cycle flows are discharged.

The membranes used for the bipolar electrodialyse are for instance Tokuyama CMS (mono-cation permselective membrane), Tokuyama ACM (proton blocker anion exchange membrane) or Tokuyama BP-1.

The electrodialyse is typically conducted at 15 V at a temperature of 35°C. The overflow of the membranes per chamber is preferably about 50 L per h. The electrode rinsing solution (E.-solution) is preferably a 4% Na₂SO₄ solution.

### Examples:

### Example 1:

A wastewater having - beneath further cations - the following concentrations of cations was provided:
- Fe:: 0.05 mg/L;
- Ca:: 0.75 mg/L;
- Mg:: 0.04 mg/L;

The pH of the wastewater was at about 8.5. The measurement of the clouding of the solution of wastewater adds up to a value of 0 NTU. The cation exchange column (Lewatit TP 208 from Bayer) was provided in a column having a length of 30 cm and a diameter of 2.5 cm. The wastewater was passed over the cation exchange column with a flow rate of 20 volume units of the bed of the cation exchange column per hour. The temperature of the cation exchange column was about 50°C. After different times the composition of the effluent solution was analyzed with regard to the concentration of Fe, Ca and Mg. The results are shown in Table 1.

**Table 1:**

| sample name | time (min) | Fe (mg/l) | Ca (mg/l) | Mg (mg/l) | pH-value | base concentration (mmol/l) |
|---|---|---|---|---|---|---|
| wastewater | 0 | 0.05 | 0.75 | 0.04 | 8.6 | 18 |
| effluent solution 1 | 30 | 0.02 | 0.19 | 0.05 | 8.5 | 15 |
| effluent solution 2 | 90 | 0.02 | 0.10 | 0.04 | 8.6 | 20 |
| effluent solution 3 | 170 | 0.03 | 0.06 | 0.05 | 8.6 | 20 |

Table 1 shows that a separation of Ca and Fe can be observed, whereas for Mg in this concentration no further separation takes place. In the cation exchange column the separation of the metals took place in the following order: Cu > V (VO) > U (UO₂) > Pb > Ni > Zn > Co > Cd > Fe (II) > Be > Mn > Ca > Mg > Sr > Ba > Na.

The binding capacity (break-through capacity) of the cation exchange column was measured as being 0.22 eq/l. This measurement was applied as described above in the present application.

The amount of the metals in Table 1 was measured by means of TCP-OES according to ISO 11885:2007 or EN ISO 11885-E22:2009.

### Example 2:

In Example 2 the same test was carried out as in Example 1 with the only difference that the concentration of Mg was increased to 26 mg/L and the concentration of Ca was increased to 25 mg/L in the wastewater solution. The results for the retention of Fe, Ca, Mg are shown in Table 2 below.

**Table 2:**

| sample name | time (min) | Fe (mg/l) | Ca (mg/l) | Mg (mg/l) | pH-value | base concentration (mmol/l) |
|---|---|---|---|---|---|---|
| wastewater | 0 | 0.05 | 25 | 26 | 8.5 | 17 |
| effluent solution 1 | 30 | 0.03 | 0.42 | 0.18 | 8.5 | 15 |
| effluent solution 2 | 90 | 0.04 | 0.58 | 0.28 | 8.5 | 16 |
| effluent solution 3 | 170 | 0.04 | 4.8 | 4.7 | 8.5 | 17 |

Table 2 shows that the retention for Mg and Ca are at 98 % for Ca and 99 % for Mg. By this mode the binding capacity of the cation exchange column was calculated to 0.44 eq/l. It was, however, observed that after 3 hours operation time the cation exchange material did not retain the metals anymore (breakthrough). Therefore, the loading capacity must be corrected to a maximum of 0.2 eg/l of the cation exchange column material, in order to ensure that no breakthrough is obtained during the method of the present invention.

## Claims

1. A method for lowering the peak concentration of hardness-causing metal cations in wastewater containing an alkali metal ion and a hardness-causing metal cation, the concentration of the hardness-causing metal cation in the wastewater being non-continuous,
wherein the wastewater is continuously passed over a cation exchange column selective for binding the hardness-causing metal cation,
**characterized in that** the hardness-causing metal cation is being retained when a threshold value concentration of the hardness-causing metal cation is exceeded during the raise to a peak concentration of the hardness-causing metal cation, and
the hardness-causing metal cation being released when its concentration falls under the threshold value concentration.

2. The method according to claim 1, wherein the cation exchange column is in the form of the alkali metal at the beginning of the method.

3. The method according to claim 1 or 2, wherein the threshold value concentration lies in the range of from 0,075 to 0,12 mmol/L of the hardness-causing metal cation in the wastewater.

4. The method according to any one of claims 1 to 3, wherein the maximum concentration of the hardness-causing metal cation in the effluent solution of the cation exchange column is at most 0,125 mmol/L.

5. The method according to any one of claims 1 to 4, wherein the maximum loading of the hardness-causing metal cation on the cation exchange column is at most 95 % of the break-through capacity of the ion exchange column at the peak concentration of the hardness-causing metal cation.

6. The method according to any one of claims 1 to 5, wherein the mean concentration of the alkali metal ion in the wastewater is in the range of from 0,5 to 3,5 mol/L.

7. The method according to any one of claims 1 to 6, wherein the concentration of the hardness-causing metal cation in the wastewater varies from 0 to 1 mmol/L.

8. The method according to any one of claims 1 to 7, wherein the cation exchange column comprises on its surface dianionic groups.

9. The method according to any one of claims 1 to 8, wherein the pH of the wastewater is more than 4.5.

10. The method according to any one of claims 1 to 9, wherein the alkali metal ion is selected from Li, Na, K or a combination thereof.

11. The method according to claim 10, wherein the alkali metal ion is Li.

12. The method according to any one of claims 1 to 11, wherein the hardness-causing metal cation is an alkali earth metal ion, a heavy metal ion or a combination of these metal ions.

13. The method according to claim 12, wherein the alkali earth metal is Ca, Mg or a combination thereof.

14. The method according to claim 12, wherein the heavy metal ion is selected from the group consisting of Cr, Ni, Zn, Mn, Fe and combinations thereof.

15. The method according to any one of claims 1 to 14, wherein the wastewater contains sulfate ions in an amount in the range of from 0.7 to 1.20 mol/L.

16. A method of converting alkali metal sulfate into alkali metal hydroxide, comprising the following steps:
(a) lowering the peak concentration of hardness-causing metal cations in wastewater containing an alkali metal ion and a hardness-causing metal cation according to the method of any one of claims 1 to 15, wherein the counter ion of the alkali metal ion is a sulfate anion; and
(b) exchanging the sulfate anion by hydroxide ion by means of electrodialysis.

## Amended claims

### Amended claims in accordance with Rule 137(2) EPC.

**1.** A method for lowering the peak concentration of hardness-causing metal cations in a continuous flow of wastewater containing an alkali metal ion and a hardness-causing metal cation, the concentration of the hardness-causing metal cation in the wastewater being non-continuous,
wherein the wastewater is continuously passed over a cation exchange column selective for binding the hardness-causing metal cation,
**characterized in that** the hardness-causing metal cation is being retained when a threshold value concentration of the hardness-causing metal cation is exceeded during the raise to a peak concentration of the hardness-causing metal cation, and
the hardness-causing metal cation being released when its concentration falls under the threshold value concentration.

**2.** The method according to claim 1, wherein the cation exchange column is in the form of the alkali metal at the beginning of the method.

**3.** The method according to claim 1 or 2, wherein the threshold value concentration lies in the range of from 0,075 to 0,12 mmol/L of the hardness-causing metal cation in the wastewater.

**4.** The method according to any one of claims 1 to 3, wherein the maximum concentration of the hardness-causing metal cation in the effluent solution of the cation exchange column is at most 0,125 mmol/L.

**5.** The method according to any one of claims 1 to 4, wherein the maximum loading of the hardness-causing metal cation on the cation exchange column is at most 95 % of the break-through capacity of the ion exchange column at the peak concentration of the hardness-causing metal cation.

**6.** The method according to any one of claims 1 to 5, wherein the mean concentration of the alkali metal ion in the wastewater is in the range of from 0,5 to 3,5 mol/L.

**7.** The method according to any one of claims 1 to 6, wherein the concentration of the hardness-causing metal cation in the wastewater varies from 0 to 1 mmol/L.

**8.** The method according to any one of claims 1 to 7, wherein the cation exchange column comprises on its surface dianionic groups.

**9.** The method according to any one of claims 1 to 8, wherein the pH of the wastewater is more than 4.5.

**10.** The method according to any one of claims 1 to 9, wherein the alkali metal ion is selected from Li, Na, K or a combination thereof.

**11.** The method according to claim 10, wherein the alkali metal ion is Li.

**12.** The method according to any one of claims 1 to 11, wherein the hardness-causing metal cation is an alkali earth metal ion, a heavy metal ion or a combination of these metal ions.

**13.** The method according to claim 12, wherein the alkali earth metal is Ca, Mg or a combination thereof.

**14.** The method according to claim 12, wherein the heavy metal ion is selected from the group consisting of Cr, Ni, Zn, Mn, Fe and combination thereof.

**15.** The method according to any one of claims 1 to 14, wherein the wastewater contains sulfate ions in an amount in the range of from 0.7 to 1.20 mol/L.

**16.** A method of converting alkali metal sulfate into alkali metal hydroxide, comprising the following steps:
(a) lowering the peak concentration of hardness-causing metal cations in wastewater containing an alkali metal ion and a hardness-causing metal cation according to the method of any one of claims 1 to 15, wherein the counter ion of the alkali metal ion is a sulfate anion; and
(b) exchanging the sulfate anion by hydroxide ion by means of electrodialysis.
